Europäisches Patentamt

European Patent Office

Office européen des brevets

(19)

(11) Veröffentlichungsnummer: **0 090 233**
**B1**

# (12) EUROPÄISCHE PATENTSCHRIFT

(45) Veröffentlichungstag der Patentschrift:
24.06.87

(51) Int. Cl.⁴: **F 23 D  14/50**

(21) Anmeldenummer: **83102463.3**

(22) Anmeldetag: **12.03.83**

(54) **Vorrichtung zur Reinigung eines Schweissbrenners.**

(30) Priorität: 30.03.82  DE 3211652
21.10.82  DE 3238918

(43) Veröffentlichungstag der Anmeldung:
05.10.83 Patentblatt 83/40

(45) Bekanntmachung des Hinweises auf die Patenterteilung:
24.06.87 Patentblatt 87/26

(84) Benannte Vertragsstaaten:
AT BE CH DE FR GB IT LI LU NL SE

(56) Entgegenhaltungen:
CH - B - 280 311
DE - A - 2 943 650
US - A - 2 318 696

(73) Patentinhaber: **Wilhelm Merkle Schweissmaschinenbau GmbH, Industriestrasse, D-8871 Kötz 1 (DE)**

(72) Erfinder: **Hafner, Josef, Ichenhauser Strasse 44, D-8870 Günzburg-Denzingen (DE)**

(74) Vertreter: **Munk, Ludwig, Dipl.-Ing., Patentanwalt Prinzregentenstrasse 1, D-8900 Augsburg (DE)**

EP 0 090 233 B1

## Beschreibung

Die Erfindung betrifft eine Vorrichtung zur Reinigung eines eine zentrale Kontaktdüse und eine die Kontaktdüse mit Abstand umgebende, rohrförmige Gasdüse aufweisenden Schweissbrenners, mit einem drehbar gelagerten, in Drehrichtung antreibbaren Reinigungskopf, der mit mindestens einem Räumorgan versehen ist und mit einer dem Reinigungskopf gegenüberliegenden, koaxial hierzu angeordneten Düsenfassung, in welche der zu reinigende Schweissbrenner einsteckbar ist.

Eine Anordnung dieser Art ist aus der DE-A 29 43 650 bekannt. Diese bekannte Vorrichtung ermöglicht zwar eine maschinelle Entfernung von den Zwischenraum zwischen der Kontaktdüse und der Gasdüse verunreinigenden Metallspritzern. Die bekannte Vorrichtung sieht jedoch keine Mittel zur Auftragung eines sogenannten Antihaftmittels vor, das einer schnellen Verunreinigung entgegenwirken soll. Sofern ein einer Verschmutzung entgegenwirkendes Antihaftmittel verwendet wird, ist man daher bei der bekannten Vorrichtung darauf angewiesen, dieses Antihaftmittel manuell aufzutragen. Dies kann sich jedoch nicht nur als sehr umständlich und aufwendig erweisen, sondern sich auch negativ auf den Antihaftmittelverbrauch auswirken.

Hiervon ausgehend ist es daher die Aufgabe der vorliegenden Erfindung, eine Vorrichtung gattungsgemässer Art so zu verbessern, dass hiermit nicht nur eine Entfernung von Metallspritzern, sondern auch eine einfache Auftragung eines Antihaftmittels möglich ist.

Diese Aufgabe wird erfindungsgemäss dadurch gelöst, dass neben dem mit mindestens einem Räumorgan versehenen Reinigungskopf ein einer zugeordneten Düsenfassung, in welche der Schweissbrenner einsteckbar ist, gegenüberliegender Sprühkopf vorgesehen ist, der eine mit einem Antihaftmittel beaufschlagbare Sprühdüse aufweist, die an den Ausgang einer saugseitig an einem Tank für Antihaftmittel liegenden Saugeinrichtung angeschlossen ist, die eine mit Schweissgas betreibbare Strömungspumpe aufweist.

Diese Massnahmen ergeben in vorteilhafter Weise eine Verschmelzung einer Antihaftmittel-Aufsprüheinrichtung und einer Reinigungseinrichtung zu einer kompakten Vorrichtung, was nicht nur eine hohe Bedienungsfreundlichkeit, sondern auch eine hohe Zuverlässigkeit gewährleistet, da infolge der Integration der Antihaftmittel-Auftragseinrichtung in die Reinigungsvorrichtung auch ein zuverlässiger maschineller Auftrag von Antihaftmittel gewährleistet ist. Gleichzeitig ergeben die erfindungsgemässen Massnahmen eine automatische und gleichzeitig sparsame Dosierung des Antihaftmittels. Da nämlich der in einer entsprechenden Gasversorgungsleitung bei abgesperrter Leitung sich aufbauende Staudruck beim Öffnen der Leitung sehr schnell abfällt und da die normale Gasströmung in der Gasversorgungsleitung für den Venturieffekt nicht aufreicht, ergibt sich hier in vorteilhafter Weise nur ein kurzer Sprühstoss, so dass eine automatische Beendigung des Sprühvorgangs und eine sparsame Dosierung von Antihaftmittel gewährleistet sind. Ein weiterer Vorteil der erfindungsgemässen Massnahmen ist darin zu sehen, dass praktisch jeder Aufwand zur Bereitstellung einer dem Sprühkopf zugeordneten Strömungsmittelquelle entfällt, da eine Schweissgasquelle in jedem Schweissbetrieb zur Verfügung steht. Die mit der Erfindung erzielbaren Vorteile sind somit insbesondere in einer ausgezeichneten Bedienungsfreundlichkeit und Zuverlässigkeit und damit insgesamt in einer guten Wirtschaftlichkeit zu sehen.

In zweckmässiger Fortbildung der übergeordneten Massnahmen können zwei nebeneinander angeordnete Düsenfassungen zum Einstecken jeweils eines Schweissbrenners vorgesehen sein, von denen eine einem Sprühkopf und eine einem Reinigungskopf gegenüberliegt. Hierbei ergeben sich in vorteilhafter Weise ein besonders übersichtlicher Aufbau sowie eine besonders sinnfällige Bedienungsweise.

Eine weitere zweckmässige Massnahme kann darin bestehen, dass der Reinigungskopf und/oder der Sprühkopf mittels eines jeweils zugeordneten, im Bereich der zugeordneten, vorzugsweise abnehmbar bzw. austauschbar angeordneten Düsenfassung angeordneten, durch einen in die betreffende Düsenfassung eingesteckten Schweissbrenner betätigbaren Kontaktschalter aktivierbar ist bzw. sind. Diese Massnahmen können in vorteilhafter Weise eine starke Vereinfachung der Handhabung bewirken, da mit Hilfe der Kontaktschalter eine automatische Aktivierung bzw. Passivierung des Reinigungs- bzw. Sprühkopfes erreicht wird.

Eine weitere vorteilhafte Ausgestaltung der übergeordneten Massnahmen kann darin bestehen, dass als Räumorgan mindestens ein bezüglich der Drehachse des Reinigungskopfes exzentrisch angeordneter Federstift vorgesehen sein kann, der vorzugsweise eine an die Kontur der zugeordneten Fläche angepasste Form aufweist. Diese Federstift kann direkt auf den Reinigungskopf aufsteckbar sein oder von einer Spiralfeder aufgenommen werden. Ein derartiger Federstift kann in vorteilhafter Weise beim Auftreten von Widerstand nachgeben, was eine schonende Behandlung der zu reinigenden Oberflächen erwarten lässt. Der in einen Ringraum zwischen zwei zu reinigenden Oberflächen eingreifende Federstift wird beim Auftreffen auf Verunreinigungen zu Schwingungen angeregt, so dass sich schon mit Hilfe lediglich eines Federstifts eine ausgezeichnete Reinigung sowohl der Innenoberfläche der Gasdüse als auch der Aussenoberfläche der Kontaktdüse erreichen lässt. Bei Verwendung einer Spiralfeder wird dies durch hierdurch bewirkte Schlingerbewegungen des Räumorgans noch verstärkt. Bei Verwendung von direkt auf den Reinigungskopf aufgesteckten Federstiften ist andererseits sichergestellt, dass die hiermit entfernten Verunreinigungen ungehindert am Reinigungskopf abprallen und von diesem abgeschleudert werden können.

Bei der aus der DE-A-29 43 650 bekannten Vorrichtung weist zwar das Räumorgan ebenfalls einen Federstift auf. Diese ist jedoch nicht an die Kontur der zu reinigenden Flächen angepasst, sondern soll achsparallel verlaufen. Abgesehen davon soll bei der bekannten Vorrichtung nicht nur der achsparallel verlaufende Federstift in den Zwischenraum zwischen Gasdüse und Kontaktdüse eindringen, sondern auch die hier den Stift tragende Spiralfeder. Die elastischen Eigenschaften dieser Spiralfeder kommen hier daher nicht oder jedenfalls nicht in nennenswertem Umfange zum Tragen. Bei der bekannten Anordnung ist es daher erforderlich, den den Reinigungskopf aufnehmenden Motor federnd aufzuhängen, was jedoch zu einem hohen Aufwand führen kann.

Weitere zweckmässige Ausgestaltungen und vorteilhafte Weiterbildungen der übergeordneten Massnahmen sind in weiteren abhängigen Ansprüchen gekennzeichnet.

Nachstehend wird ein Ausführungsbeispiel der Erfindung anhand der Zeichnung näher erläutert. In der Zeichnung zeigen:

Figur 1 eine Ansicht eines als Tischgerät ausgebildeten Ausführungsbeispiels,

Figur 2 einen durch die dem Reinigungskopf zugeordnete Düsenfassung verlaufenden Schnitt durch das Gerät nach Figur 1,

Figur 3 eine Ansicht eines mit einer Spiralfeder bestückten Reinigungskopfes,

Figur 4 eine Ansicht eines mit zwei Federstiften versehenen Reinigungskopfes und

Figur 5 einen durch die dem Sprühkopf zugeordnete Fassung verlaufenden Schnitt durch das Gerät nach Figur 1.

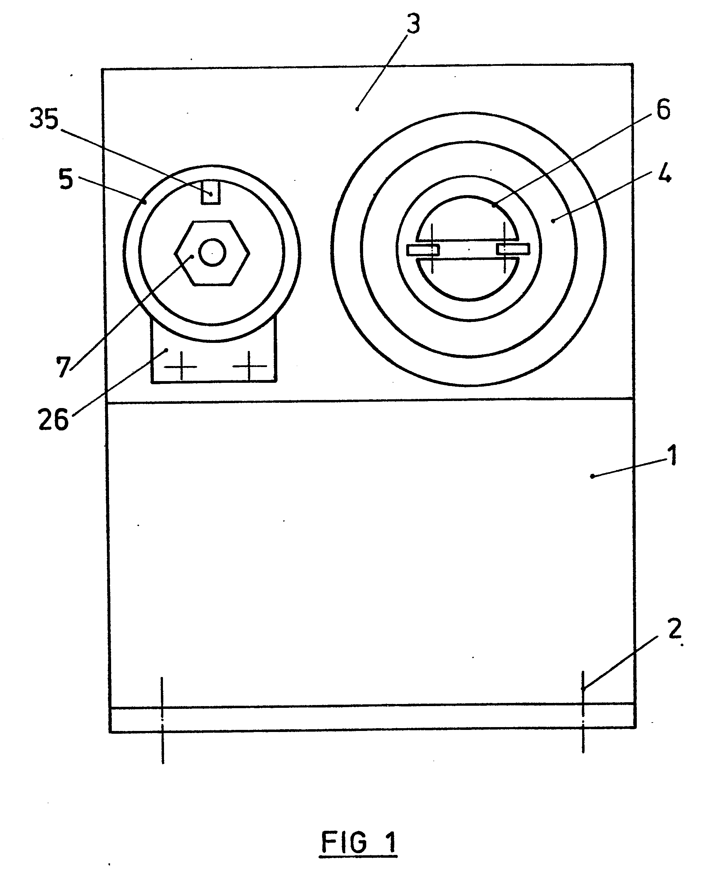

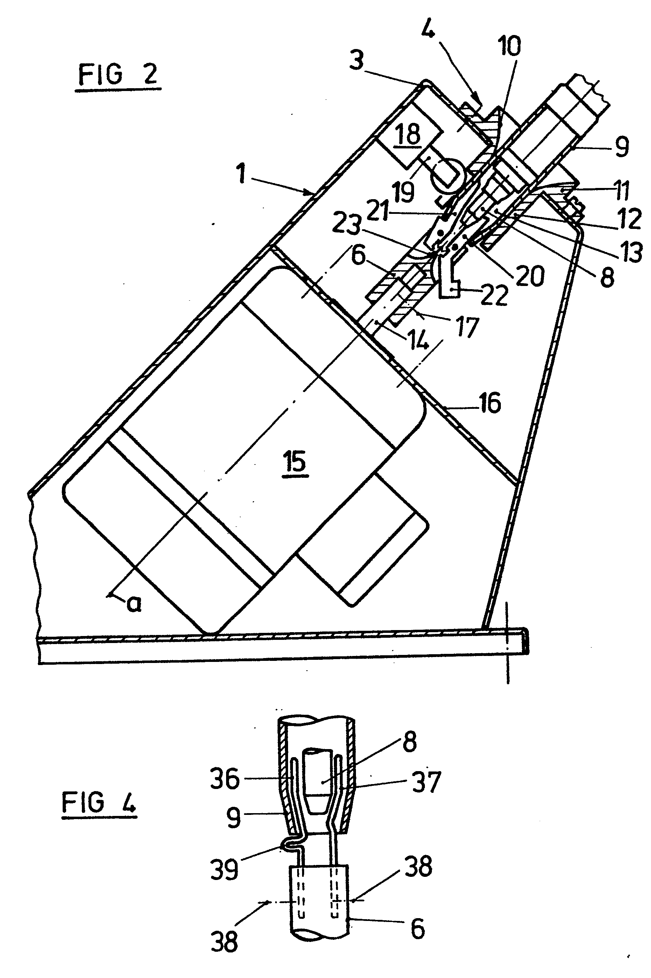

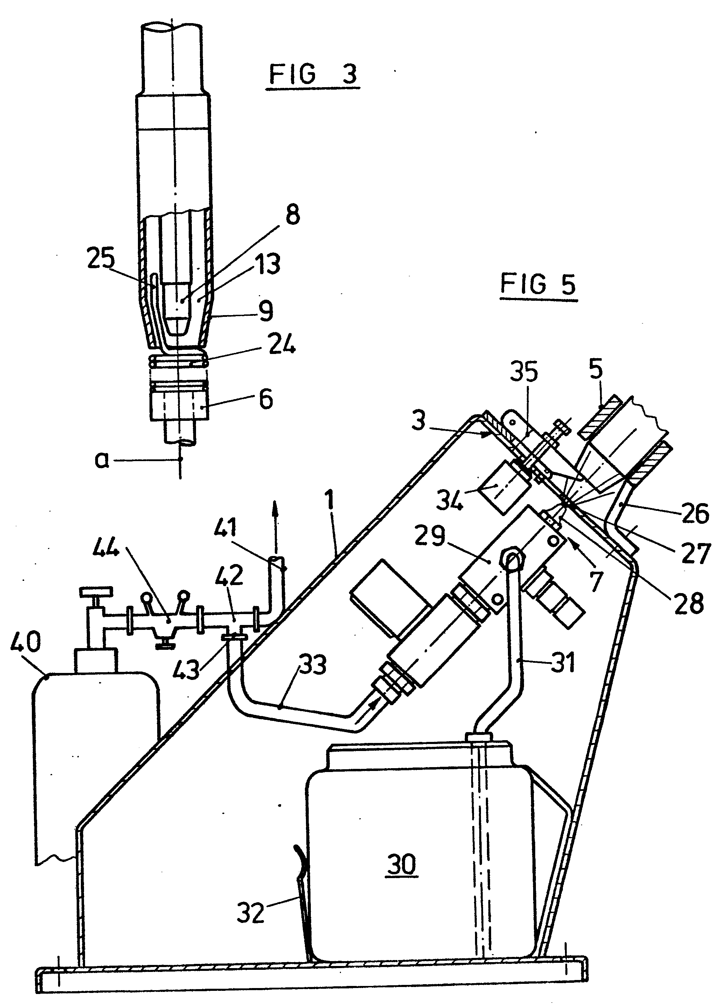

Das in Figur 1 dargestellte Tischgerät ist mit einem vorzugsweise aus Blech bestehenden, selbsttragenden Gehäuse 1 versehen, das mit Hilfe von Halteschrauben 2 auf einer geeigneten Tischplatte festlegbar ist. Im Bereich der Bedienungsseite ist ein zur Bewerkstelligung einer guten Zugänglichkeit und guter Sichtverhältnisse pultartig geneigter Wandabschnitt 3 vorgesehen, der die Düsenfassungen zum Einstecken des zu reinigenden bzw. mit einem Antihaftmittel zu beaufschlagenden Schweissbrenners aufweist. Im dargestellten Ausführungsbeispiel sind zwei nebeneinander angeordnete Düsenfassungen 4 bzw. 5 vorgesehen. Die eine Düsenfassung 4 führt zu einem ihr gegenüberliegenden Reinigungskopf 6, die andere Düsenfassung 5 zu einem ihr gegenüberliegenden Sprühkopf 7. Der Reinigungskopf 6 dient zur Entfernung von im vorderen Bereich eines Schweissbrenners dich anlagernden Metallspritzern, der Sprühkopf 7 dient zum Einsprühen der gereinigten Oberflächen eines Schweissbrenners mit einem Antihaftmittel, das einem Anlagern von Metallspritzern entgegenwirkt. Der Aufbau und die Wirkungsweise eines Schutzgasschweissbrenners sind an sich bekannt und bedürfen daher im vorliegenden Zusammenhang keiner umfangreichen Erläuterung mehr. Ein derartiger Schweissbrenner besteht, wie aus den Figuren 2 und 3 erkennbar ist, aus einer beim Schweissen den Schweissdraht führenden Kontaktdüse 8 und einer diese mit Abstand umgebender, rohrförmiger, das Schutzgas führenden Gasdüse 9. Die Gasdüse 9 ist im Bereich ihres vorderen Endes zur Bündelung der Gasströmung konisch eingeschnürt. Die Kontaktdüse 8, mit welcher der Strom auf den Schweissdraht übertragen wird, ist im Bereich ihres vorderen Endes mit einem zur Einschnürung der Gasdüse 9 etwa parallelen Kegelstumpf versehen. Der zu reinigende bzw. einzusprühende Schweissbrenner wird bis zu einem Anschlag in die Düsenfassung 4 bzw. 5 eingesteckt.

Die Düsenfassungen 4 bzw. 5 können, wie in Figur 2 anhand der Düsenfassung 4 gezeigt ist, mit einem das Einführen eines Schweissbrenners erleichternden Einlaufkonus 10 versehen sein. Die dem Reinigungskopf 6 zugeordnete Düsenfassung 4 besteht, wie Figur 2 weiter erkennen lässt, aus einem auf dem Wandabschnitt 3 festgelegten, den Einlaufkonus 10 aufweisenden Ring 11, an den eine in das Gehäuse 1 eingreifende, dem Reinigungskopf 6 zugewandte Haltebüchse 12 angeformt ist. Der Durchmesser der Büchsenbohrung besitzt gegenüber dem Aussendurchmesser der Gasdüse 9 eines zugeordneten Schweissbrenners leichtes Übermass, so dass ein zwangfreies Ein- bzw. Ausführen des zu reinigenden Schweissbrenners möglich ist. Die Düsenfassung 4 und der zugeordnete Reinigungskopf 6 sind koaxial in Achsrichtung hintereinander angeordnet. Der Reinigungskopf 6 ist mit einem Räumorgan bestückt, das in die zugewandte Haltebüchse 12 und bei eingelegtem Schweissbrenner in den Ringraum 13 zwischen Kontaktdüse 8 und Gasdüse 9 eingreift. Zum Antrieb des drehbar gelagerten Reinigungskopfes 6 in Drehrichtung ist ein mit koaxial zur Achse der Düsenfassung 4 angeordneter Antriebswelle 14 am Gehäuse 1 befestigter Motor 15 vorgesehen. Im dargestellten Ausführungsbeispiel ist das Gehäuse 1 zur Aufnahme des Motors 15 mit einer etwa lotrecht zur Achse von Düsenfassung 4 bzw. zugeordnetem Reinigungskopf 6 bzw. Antriebswelle 14 angeordneten Zwischenwand 16 versehen. Das Gehäuse 1 ist in Richtung der etwa lotrecht zum pultartig geneigten Wandabschnitt 3 verlaufenden Achse a so langgestreckt ausgebildet, dass die Düsenfassung 4, der Reinigungskopf 6 und der zugeordnete Antriebsmotor 15 hintereinander Platz finden.

Der Reinigungskopf 6 ist einfach als auf die Motorwelle 14 aufsteckbares Bauteil ausgebildet, das in Drehrichtung und in Achsrichtung gesichert ist. Hierzu kann etwa eine in eine Ausnehmung der Antriebswelle 14 eingreifende Mitnehmerschraube 17 vorgesehen sein. Die Mitnehmerschraube 17 ist leicht lösbar, so dass der Reinigungskopf 6 leicht abgenommen und gegen einen anderen ausgetauscht werden kann. Zweckmässig kann ein Satz mit mehreren Reinigungsköpfen 6 vorgesehen sein, deren Räumorgan an unterschiedliche Düsentypen angepasst ist und die daher je nach Bedarf ausgewechselt werden. Dasselbe gilt auch für die Düsenfassungen 4 bzw. 5, deren Bohrungen ebenfalls an jeweils eine Düsentype angepasst sind. Zur Aktivierung des Antriebsmotors 15 ist in Figur 2 ein vom in die Düsenfassung 6 eingesteckten Schweissbrenner betätigbarer Kontaktschalter 18 vorgesehen. Dieser ist einfach mit einem Schaltstift 19 versehen, der mit einer hierauf angeordneten Rolle durch einen Schlitz der Haltebüchse 12 hindurchgreift. Der Kontaktschalter zur Aktivierung des Antriebsmotors 15 könnte einfach auch als mit einer Kröpfung durch den Schlitz der Haltebüchse 12 hindurchgreifende Biegefeder oder dergleichen ausgebildet sein.

Bei dem in Figur 2 dargestellten Ausführungsbeispiel ist der Reinigungskopf 6 zur Bildung des Räumorgans mit zwei schwenkbar gelagerten Räumflügeln 20 bzw. 21 bestückt, von denen der eine Räumflügel 20 das vordere Ende der Kontaktdüse 8 und der andere Räumflügel 21 das vordere Ende des Innenumfangs der Gasdüse 9 reinigen soll. Der Reinigungskopf 6 ist zur Aufnahme der schwenkbaren Räumflügel 20 bzw. 21 im Bereich seines vorderen Endes gabelförmig ausgebildet. Die Räumflügel 20 bzw. 21 sind so ausgebildet und angeordnet, dass sie unter der Wirkung der bei laufendem Motor an ihnen angreifenden Zentrifugalkräfte gegenläufig nach radial innen bzw. aussen schwenken, so dass sich ihre vorzugsweise abgerundeten Kanten an die jeweils zugeordnete, zu reinigende Mantelfläche anlegen. Zur Bewerkstelligung eines sauberen Reinigungsvorgangs sind die Räumkanten der Räumflügel 20 bzw. 21 etwa parallel zum Querschnittsverlauf der jeweils zugeordneten Mantelfläche abgeschrägt. Der unter Zentrifugalkraftwirkung nach innen schwenkende Räumflügel 20 ist nach Art eines zweiarmigen Hebels mit einem gegeläufig hierzu sich erstreckenden Gegengewicht 22 verbunden und mittels einer Feder 23 mit dem benachbarten, gegengewichtlosen Räumflügel 21 gekoppelt. Anstelle eines oder mehrerer schwenkbarer Räumflügel könnten zur Bildung des Räumorgans auch Borsten einer Stahlbürste oder dergleichen vorgesehen sein.

Bei dem der Figur 3 zugrunde liegenden Ausführungsbeispiel ist der hier ebenfalls mit 6 bezeichnete Reinigungskopf mit einer koaxial zur Achse a angeordneten Spiralfeder 24 bestückt, deren vom Reinigungskopf 6 abgewandte, vorderste Windung in einen aufgebogenen, bezüglich der Achse a exzentrischen Federstift 25 ausläuft, der das Räumorgan bildet und in den Ringraum 13 zwischen Kontaktdüse 8 und Gasdüse 9 eingreift. Der hier praktisch durch einen Endabschnitt des Federdrahts gebildete Federstift 25 besitzt runden Querschnitt, was eine besonders schonende Behandlung der zu reinigenden Mantelflächen ergibt. Die Spiralfeder 25 ermöglicht bei laufendem Antriebsmotor Schlingerbewegungen des das Räumorgan bildenden Federstifts 25, so dass dieser sowohl mit der Innenumfangsfläche der Gasdüse 9 als auch mit der Aussenumfangsfläche der Kontaktdüse 8 in Reinigungsberührung kommt. Der Federstift 25 ist etwa parallel zum Verlauf der benachbarten Mantelflächen gebogen. Anstelle eines aus der Feder 24 herauslaufenden, an diese praktisch angeformten Federstifts 25 könnte auch ein an die Feder 24 angesetzter, das Reinigungsorgan bildender Stift vorgesehen sein.

Bei dem der Figur 4 zugrunde liegenden Ausführungsbeispiel sind zur Bildung von Räumorganen einfach zwei Federstifte 36 bzw. 37 vorgesehen, die in zugeordnete, exzentrische Bohrungen des Reinigungskopfes 6 einsteckbar und mittels lotrecht hierzu verlaufender Klemmschrauben 38 festklemmbar sind. Der in Figur links gezeichnete Federstift 36 soll im dargestellten Ausführungsbeispiel der Innenoberfläche der Gasdüse 9 zugeordnet sein. Der andere Federstift 37 soll der Aussenoberfläche der Kontaktdüse 8 zugeordnet sein. Die Federstifte 36 bzw. 37 bestehen aus Rundstahl und sind an die Kontur der jeweils zugeordneten Fläche angepasst. Der der Gasdüse 9 zugeordnete Federstift ist oberhalb des Reinigungskopfes 6 mit einer nach radial aussen gehenden Kröpfung 39 versehen, die eine Reinigungskante für die Stirnseite der Gasdüse 9 darstellt und gleichzeitig einen Anschlag bilden kann. Dadurch, dass die Federstifte 36 bzw. 37 hier direkt auf den Reinigungskopf 38 aufgesetzt sind, ergibt sich im Gegensatz zur Verwendung einer Spiralfeder, die als Auffangbehälter wirken kann, eine einfache und ungehinderte Schmutzausführung. Im dargestellten Ausführungsbeispiel sind die Federstifte 36 bzw. 37 in Bohrungen des Reinigungskopfes 6 eingesteckt. Es wäre aber auch denkbar, den bzw. die Federstifte am Reinigungskopf 6 festzuklemmen. Im Falle von zwei Federstiften, wie hier, könnte auch ein am Reinigungskopf 6 festlegbarer, im Querschnitt etwa U-förmiger Bügel vorgesehen sein, dessen Schenkel die Federstifte bilden. In jedem Falle ist somit eine Auswechselbarkeit der Federstifte gegeben, so dass für jeden zu reinigenden Schweissbrenner der passende bzw. die passenden Federstifte Verwendung finden können.

Nach erfolgter mechanischer Reinigung werden die gereinigten Mantelflächen mit einem Antihaftmittel eingesprüht. Ist der hierzu erforderliche Sprühkopf im Bereich des Reinigungskopfes angeordnet, wird lediglich eine Düsenfassung benötigt. Im dargestellten Ausführungsbeispiel sind, wie Fig. 1 zeigt, zwei nebeneinander angeordnete Düsenfassungen vorgesehen, von denen die Düsenfassung 4 beim Reinigen und die Düsenfassung 5 beim Einsprühen beschickt wird. Die dem Sprühkopf 7 zugeordnete Düsenfassung 5 kann einfach, wie Figur 5 am besten erkennen lässt, als Rohrabschnitt ausgebildet sein, der mittels einer Abstandlasche 26 am Wandabschnitt 3 oberhalb einer Wandausnehmung 27, deren Ränder eine Sprühkulisse bilden, befestigt sein kann. Der Sprühkopf 7 ist mit einer koaxial zur Achse der zugeordneten Düsenfassung 5 angeordneten Sprühdüse 28 versehen, deren Düsenöffnung sich etwas innerhalb des Wandabschnitts 3 befindet, so dass die Ränder der zugeordneten Wandausnehmung 27 als Kulisse wirken, die eine zu starke Streuung des Sprühstrahls verhindern. Zur Beaufschlagung der Sprühdüse 28 mit dem flüssigen Antihaftmittel ist eine Saugeinrichtung vorgesehen, die saugseitig an einem entsprechenden Tank liegt.

Im dargestellten Ausführungsbeispiel ist zur Bildung der Saugeinrichtung eine Strömungspumpe vorgesehen. Hierzu ist die Sprühdüse 28 am Ausgang einer mit einem Strömungsmittelanschluss versehenen Venturidüse 29 angeordnet, die einen in einen Antihaftmittel-Tank 30 eingeführten Saugstutzen 31 aufweist. Der Tank 30 ist hier im Gehäuse 1 angeordnet und durch Klemmfedern 32 in seiner Lage gesichert. Zur Bewerkstelligung einer einfachen Zugänglichkeit zum Tank 30 und/oder zum daneben angeordneten, dem Reinigungskopf zugeordneten Antriebsmotor 15 ist das Gehäuse 1 mit einem abnehmbaren Deckel versehen.

Die Aktivierung der Venturidüse 29, d.h., die Beaufschlagung mit Strömungsmittel, wird mittels eines Kontaktschalters 34 bewerkstelligt, der von dem in die zugeordnete Düsenfassung eingeführten Brenner betätigbar ist. Der Kontaktschalter 34 ist im dargestellten Ausführungsbeispiel mit einem gleichzeitig als Brenneranschlag fungierenden Schwenkhebel 35 versehen, der an einem Schaltstift angreift. Die Anschlagstellung des Schwenkhebels 35 sowie des zugeordneten Schaltstifts sind durch zugeordnete Stellschrauben einstellbar.

Als Strömungsmittel zum Ansaugen und Versprühen des Antihaftmittels findet Schweissgas Verwendung, das aus einer entsprechenden Gasquelle entnommen wird, was eine besonders einfache Ausführung ergibt, da Schweissgas in jeder Schweisserei zur Verfügung steht. Im vorliegenden Fall handelt es sich hierbei um Schutzgas, das normalerweise die Komponenten Argon und $CO_2$ enthält. Ein derartiges Gasgemisch kann unbedenklich als Strömungsmittel zur Beaufschlagung der hier vorgesehenen Strömungspumpe Verwendung finden. Im Falle einer zentralen Gasversorgung wird hiervon einfach eine zur Venturidüse 29 führende Stichleitung 33 abgezweigt. Normalerweise ist jedoch jedem Schweissapparat bzw. Schweissbrenner eine Gasflasche zugeordnet, ein derartiges Beispiel liegt der Figur 5 zugrunde. Hierbei ist die von der Gasflasche 40 zum zugeordneten Schweissbrenner führende Gasleitung 41 mit T-Stück 42 versehen, dessen Abzweigausgang 43 mittels der Stichleitung 33 am Eingang der Venturidüse 29 liegt. Die Bereitstellung von zur Aktivierung der Venturidüse 29 benötigtem Strömungsmittels erfordert hierbei ersichtlich keinen nennenswerten zusätzlichen Aufwand. Der Gasdurchsatz für Schweissbetrieb ist mittels eines Einstellglieds 44 einstellbar. Der Durchsatz bei Schutzgasschweissbrennern liegt in der Grössenordnung von etwa 10 Liter pro Minute. Sofern kein Gas mehr verbraucht wird, baut sich im Leitungssystem stromabwärts vom Einstellglied 44 ein gewisser Staudruck auf, der bei einer anschliessenden Gasentnahme verhältnismässig schnell abfällt. Hierdurch ergibt sich für den Sprühvorgang in vorteilhafter Weise im Anschluss an einen anfänglichen Sprühstoss eine automatische Beendigung des Sprühvorgangs, da die normale Gasströmung für den Venturieffekt nicht ausreicht. Hiermit wird demnach ein sparsamer Verbrauch sowie eine automatische Dosierung des Antihaftmittels gewährleistet.

**Patentansprüche**

1. Vorrichtung zur Reinigung eines eine zentrale Kontaktdüse (8) und eine die Kontaktdüse (8) mit Abstand umgebende, rohrförmige Gasdüse (9) aufweisenden Schweissbrenners mit einem drehbar gelagerten, in Drehrichtung antreibbaren Reinigungskopf (6), der mit mindestens einem Räumorgan (20, 21 bzw. 25 bzw. 36, 37) versehen ist und mit einer dem Reinigungskopf (6) gegenüberliegenden, koaxial hierzu angeordneten Düsenfassung (4), in welche der zu reinigende Schweissbrenner einsteckbar ist, dadurch gekennzeichnet, dass neben dem Reinigungskopf (6) ein der Düsenfassung (4) oder einer daneben angeordneten, zweiten Düsenfassung (5), in welche ein weiterer Schweissbrenner einsteckbar ist, gegenüberliegender Sprühkopf (7) vorgesehen ist, der eine mit einem Antihaftmittel beaufschlagbare Sprühdüse (28) aufweist, die an den Ausgang einer saugseitig an einem Tank (30) für Antihaftmittel liegenden Saugeinrichtung angeschlossen ist, die eine mit Schweissgas betreibbare Strömungspumpe (29) aufweist.

2. Vorrichtung nach Anspruch 1, dadurch gekennzeichnet, dass die Strömungspumpe (29) mit dem Abzweigstutzen (43) eines in einer von einer Gasquelle abgehenden, vorzugsweise mit einem Reduzierventil (44) versehenen Gasleitung angeordneten T-Stücks (42) verbunden ist.

3. Vorrichtung nach einem der vorhergehenden Ansprüche, dadurch gekennzeichnet, dass der Reinigungskopf (6) und/oder der Sprühkopf (7) mittels eines jeweils durch einen in die betreffende Düsenfassung eingesteckten Schweissbrenner betätigbaren Kontaktschalters (18 bzw. 19) aktivierbar ist bzw. sind.

4. Vorrichtung nach einem der vorhergehenden Ansprüche, dadurch gekennzeichnet, dass als Räumorgan mindestens ein bezüglich der Drehachse des Reinigungskopfes (6) exzentrisch angeordneter, vorzugsweise auf den Reinigungskopf (6) aufsetzbarer Federstift (25 bzw. 36, 37) vorgesehen ist, der vorzugsweise eine an die Kontur der zugeordneten Fläche angepasste Form aufweist.

5. Vorrichtung nach Anspruch 4, dadurch gekennzeichnet, dass zwei vorzugsweise einander gegenüberliegende Reinigungsstifte (36 bzw. 37) vorgesehen sind, von denen einer der Gasdüse (9) und einer der Kontaktdüse (8) zugeordnet ist, wobei vorzugsweise zumindest der dem Innenumfang einer Gasdüse (9) eines Schutzgasschweissbrenners zugeordnete Federstift (36) eine an der zugeordneten Düsenstirnseite zur Anlage kommende Kröpfung (39) aufweist.

6. Vorrichtung nach einem der vorhergehenden Ansprüche, dadurch gekennzeichnet, dass der Reinigungskopf (6) mit mindestens einem schwenkbar gelagerten, das Räumorgan bildenden Räumflügel (20 bzw. 21) versehen ist, dessen als vorzugsweise abgerundete Räumkanten ausgebildete Kanten entsprechend der jeweils zugeordneten, zu reinigenden Fläche gekrümmt sind.

7. Vorrichtung nach Anspruch 6, dadurch gekennzeichnet, dass zwei in den Ringraum zwischen Gasdüse (9) und Kontaktdüse (8) eingreifende, unter Wirkung der Zentrifugalkraft gegenläufig schwenkende Räumflügel (20 bzw. 21) vorgesehen sind, von denen einer dem Aussenumfang der Kontaktdüse (8) und einer dem Innenumfang der Gasdüse (9) zugeordnet ist.

### Claims

1. A device for cleaning a welding torch with a central nozzle (8) and a tube-like gas nozzle (9) surrounding the said contact nozzle (8) at a distance, having a cleaning head (6) which is turningly supported, can be driven in the direction of turning, and has at least one clearing organ (20, 21 or resp. 25 or resp. 36, 37), and a nozzle holder (4) which is situated opposite the cleaning head (6) and coaxial therewith and into which the blowpipe to be cleaned can be inserted, characterized in that, beside the cleaning head (6), there is a spraying head (7) situated opposite the nozzle holder (4) or opposite a second nozzle holder (5), into which another blowpipe can be inserted, and having a spraying nozzle (28) which can be charged with an anti-adhesive agent and is connected with the outlet of a sucking mechanism connected with the sucking side to a tank (3) for an anti-adhesive agent and having a flow pump (29) which can be operated on welding gas.

2. A device as claimed in claim 1 characterized in that the flow pump (29) is connected with the branch piece (43) of a T-piece (42) situated in a gas pipe which comes from a gas source and preferably has a pressure-reducing valve (44).

3. A device as claimed in anyone of the preceding claims characterized in that the cleaning head (6) and/or the spraying head (7) can be activated by means of a contact switch (18 or resp. 19) which can be operated by a welding torch inserted into the respective nozzle holder (4 or resp. 5).

4. A device as claimed in anyone of the preceding claims characterized in that, as a clearing organ, there ist at least one spring pin (25 or resp. 36, 37) which is eccentric in relation to the turing axis of the cleaning head (6), can preferably be put onto the cleaning head (6), and is preferably shaped according to the contour of the cooperating surface.

5. A device as claimed in claim 4 characterized in that there are two clearing pins (36 or resp. 37) which are preferably situated opposite each other and of which one cooperates with the gas nozzle (9) and one with the contact nozzle (8) whereby preferably at least the spring pin (36) cooperating with the inner circumference of a gas nozzle (9) of a protective gas welding torch has a crank (39) which comes to rest against the cooperating front side of the nozzle.

6. A device as claimed in anyone of the preceding claims characterized in that the cleaning head (6) has at least one clearing wing (20 or resp. 21) which is turningly supported, forms the clearing organ, and of which the edges preferably in the form of rounded-off clearing edges are curved according to the respective cooperating surface to be cleaned.

7. A device as claimed in claim 6 characterized in that there are two clearing wings (20 or resp. 21) which take action in the annular area between the gas nozzle (9) and the contact nozzle (8), turn in contrary sense due to the effect of the centrifugal force, and of which one cooperates with the outer circumference of the contact nozzle (8) and one with the inner circumference of the gas nozzle (9).

### Revendications

1. Dispositif pour le nettoyage de chalumeaux soudeurs munis d'une tuyère de contact centrale (8) et d'une tuyère à gaz (9) tubulaire entourant cette tuyère de contact (8) à une certaine distance d'elle, ce dispositif de nettoyage étant muni d'une tête de nettoyage rotative (6) susceptible d'être commandée dans le sens de rotation, munie d'au moins un moyen de nettoyage (20, 21 ou 25 ou 36, 37) et d'un support de tuyère (4) opposé à la tête de nettoyage (6) et coaxial avec elle, où le chalumeau soudeur à nettoyer peut être inséré, caractérisé en ce qu'est prévue, à côté de la tête de nettoyage (6), une tête de giclage (7) opposée à ce support de tuyère (4) ou à un deuxième support de tuyère (5) juxtaposé au premier, où peut être inséré un chalumeau soudeur ultérieur, cette tête de giclage (7) étant munie d'une tuyère de giclage (28) susceptible d'être alimentée d'un agent antiadhérent et, à cet effet, raccordée à la sortie d'un dispositif d'aspiration, raccordé du côté aspiration à un réservoir d'agent antiadhérent (30) et équipé d'une pompe de dosage (29) débitant un gaz de soudage.

2. Dispositif selon la revendication 1, caractérisé en ce que ladite pompe (29) est raccordée à la tubulure de dérivation (43) d'un raccord en T (42), prévu sur une conduite à gaz venant d'une source de gaz et de préférence équipée d'une soupape de réduction.

3. Dispositif selon l'une ou l'autre des revendications précédentes 1–2, caractérisé en ce que ladite tête de nettoyage (6) et/ou ladite tête de giclage (7) peut ou peuvent être activées au moyen d'un interrupteur à contact (18 et/ou 19) commandé par un chalumeau soudeur introduit dans le support de tuyère concerné.

4. Dispositif selon l'une ou l'autre des revendications précédentes 1–3, caractérisé en ce qu'en guise de moyen de nettoyage est prévu au moins un doigt ou pointe élastique (25 ou 36, 37), monté de manière excentrique par rapport à l'axe de rotation de la tête de nettoyage (6), de préférence sur cette dernière, doigt ou pointe dont la forme est de préférence adaptée à celle de la surface à nettoyer correspondante.

5. Dispositif selon la revendication 4, caractérisé en ce qu'il est muni de deux doigts de nettoyage (36, 37) de préférence mutuellement opposés, dont l'un est associé à la tuyère à gaz (9) et l'autre est associé à la tuyère de contact (8), et en ce qu'au moins le doigt élastique (36), associé à la surface périphérique intérieure d'une tuyère à gaz (9) d'un chalumeau soudeur pour le soudage sous gaz protecteur, présente de préférence une partie proéminente (39) s'appliquant à la face frontale de la tuyère correspondante.

6. Dispositif selon l'une ou l'autre des revendications précédentes 1–5, caractérisé en ce que la tête de nettoyage (6) présente au moins une ailette pivotante (20 ou 21) y articulée faisant office de moyen de nettoyage, dont les bords, de préférence arrondis en guise de bords de balayage, sont courbés conformément à la forme courbe de la surface à nettoyer.

7. Dispositif selon la revendication 6, caractérisé en ce que sont prévues deux ailettes de nettoyage (20, 21), prenant dans l'espace annulaire situé entre la tuyère à gaz (9) et la tuyère de contact (8) et pivotant en des sens opposés sous la commande de la force centrifuge, dont l'une est associée à la surface périphérique de la tuyère de contact (8) et l'autre est associée à la surface périphérique intérieure de la tuyère à gaz (9).

0 090 233

FIG 1

9

0 090 233

FIG 2

FIG 4

11

FIG 3

FIG 5